# EUROPEAN PATENT APPLICATION

(11) **EP 4 471 943 A1**
(43) Date of publication of application: **04.12.2024**
(21) Application number: 23771144.5
(22) Date of filing: 17.03.2023
(51) Int. Cl.: H01M 10/658, H01M 10/6569, H01M 10/6551, H01M 10/613, H01M 50/211

(54) **HEAT ABSORBER AND BATTERY MODULE COMPRISING SAME**

(30) Priority: 18.03.2022 KR 20220034316
(71) Applicant: LG Energy Solution, Ltd., Seoul 07335 (KR)
(72) Inventor: LEE, Jin Kyu, Daejeon 34122 (KR); KIM, Soo Han, Daejeon 34122 (KR); YOON, Doo Han, Daejeon 34122 (KR); SON, Chang Keun, Daejeon 34122 (KR); LEE, Yong Ho, Daejeon 34122 (KR); KONG, Seung Jin, Daejeon 34122 (KR)
(74) Representative: Plasseraud IP
(86) International application number: PCT/KR2023/003609
(87) International publication number: WO 2023/177266

(57) **Abstract**

A heat absorber according to an embodiment of the present invention may absorb heat generated in a battery cell. The heat absorber may include: an absorbent configured to absorb a cooling liquid; and an exterior in which the absorbent is accommodated in a state of absorbing the cooling liquid.

## Description

### TECHNICAL FIELD

### CROSS-REFERENCE TO RELATED APPLICATION

The present application claims the benefit of the priority of Korean Patent Application Nos. 10-2022-0034316, filed on March 18, 2022, and 10-2023-0035225, filed on March 17, 2023, which are hereby incorporated by reference in their entirety.

### TECHNICAL FIELD

The present invention relates to a heat absorber absorbing heat generated from a battery cell and a battery module including the same.

### BACKGROUND ART

Secondary batteries capable of charging and discharging are suitable for use as built-in battery cells because the secondary batteries do not require replacement of battery cells, and as stability and capacity of secondary batteries are rapidly improved, the secondary batteries are applied to various devices.

For example, secondary batteries are not only widely used as energy sources for wireless mobile devices, which are small multi-functional products, or wearable devices worn on the human body, but also are used as an energy source for electric vehicles and hybrid electric vehicles, which are proposed as an alternative to existing gasoline vehicles and diesel vehicles that cause air pollution, or power storage system (ESS).

Particularly, in order to use a secondary battery as a large-capacity and high-output energy source, a battery module including a plurality of battery cells or a battery pack including a plurality of the battery modules is being used. As described above, as the secondary battery is used as the energy source of large capacity and high output, the problem of securing safety of the secondary battery has become an important subject of interest.

According to the related art, in order to prevent the secondary battery from rapidly shortening its lifespan due to a temperature during long-term use, a cooling system has been designed based on a heat release rate and a reliable operating temperature according to usage environments of the secondary battery. However, when one battery cell provided in the battery module or battery pack exceeds a critical temperature due to abnormal heat generation, thermal runaway and propagation may occur to the battery cells therearound, resulting in safety problems.

In order to prevent this safety problem, in the related art, a method for disposing an insulator between the plurality of battery cells or between the plurality of battery modules has been used. However, since a thickness of the insulator has to be very thick in order to sufficiently delay heat propagation, there is a problem in that energy density of the secondary battery is lowered due to the volume of the insulator. In addition, since the heat insulator only delays the heat propagation, it is difficult to prevent fire due to thermal runaway and propagation from occurring.

### DISCLOSURE OF THE INVENTION

### TECHNICAL PROBLEM

An object of the prevent invention for solving the above problem is to provide a heat absorber capable of preventing fire due to thermal runaway of a battery cell and a battery module including the same.

### TECHNICAL SOLUTION

A heat absorber according to an embodiment of the present invention may absorb heat generated in a battery cell. The heat absorber may include: an absorbent configured to absorb a cooling liquid; and an exterior in which the absorbent is accommodated in a state of absorbing the cooling liquid.

The cooling liquid may be water in which an additive is mixed, and wherein the additive may be a material that improves extinguishing ability of the cooling liquid.

The absorbent may include a super absorbent polymer or super absorbent fiber.

The exterior may be provided with a venting part configured to discharge a vaporized cooling liquid when the cooling liquid is vaporized to increase in internal pressure of the exterior.

The exterior may include: an accommodation part configured to accommodate absorbent; and a sealing part disposed at at least a portion of a circumference of the accommodation part. The sealing part may include: a first sealing part; and a second sealing part having sealing strength less than that of the first sealing part.

The second sealing part may have an area less than that of the first sealing part.

A battery module according to an embodiment of the present invention may include: a housing; a plurality of battery cells accommodated in the housing; and at least one heat absorber accommodated in the housing so as to be in contact with the battery cells. The heat absorber may include: an absorbent configured to absorb a cooling liquid; and an exterior in which the absorbent is accommodated in a state of absorbing the cooling liquid.

The heat absorber may be disposed between the plurality of battery cells.

The heat absorber may include: one heat absorber having a first thickness; and the other heat absorber having a second thickness greater than the first thickness and disposed inward than the one heat absorber.

The battery module may further include a heat conducting member that is in contact with the plurality of battery cells and the heat absorber.

The heat absorber may be disposed between the plurality of battery cells and an inner surface of the housing.

The battery module may further include a heat conducting member that is in contact with the plurality of battery cells and disposed at an opposite side of the heat absorber with the plurality of battery cells therebetween.

The battery module may further include a heat sink that is in contact with an outer surface of the housing and facing the heat conducting member with the housing therebetween.

The exterior may be provided with a venting part configured to discharge a vaporized cooling liquid when the cooling liquid is vaporized to increase in internal pressure of the exterior.

A side of the exterior, in which the venting part is provided, may correspond to a side of each battery cell, from which an electrode lead protrudes.

The venting part may face an electrode lead of each of the battery cells in a stacking direction or full-width direction of the battery cell.

The battery cell may be provided with a gas venting part configured to discharge an internal gas of the battery cell, and a side of the exterior, in which the venting part is provided, may correspond to a side of the battery cell, in which the gas venting part is provided.

The battery cell may be provided with a gas venting part configured to discharge an internal gas of the battery cell, and the venting part may face the gas venting part of the battery cell in a stacking direction or full-width direction of the battery cell.

At least one venting hole may be formed in the housing, and the venting part may non-overlap the venting hole in a penetrated direction of the venting hole.

A pair of venting parts may be provided to face battery cells different from each other, respectively.

### ADVANTAGEOUS EFFECTS

According to the preferred embodiment of the present invention, the heat absorber may include the absorbent that absorbs the cooling liquid and the exterior that accommodates the absorbent. Since the heat absorber has the large heat absorption capacity compared to its volume, when the battery module may be provided with the heat absorber, the heat of the battery cell may be effectively dissipated while minimizing the decrease in energy density of the battery module.

In addition, the cooling liquid may be mixed with the additive that improves the fire extinguishing ability. Thus, the vapor vaporized from the cooling liquid due to the high heat by the thermal runaway of the battery cell may be discharged to the outside of the exterior to effectively prevent the fire from occurring.

In addition, the effects that are obvious to those skilled in the art may be predicted from the configurations according to the embodiment of the present invention.

### BRIEF DESCRIPTION OF THE DRAWINGS

The following drawings attached in this specification illustrate a preferred embodiment of the present invention and function to make further understood the technical spirit of the present invention along with the detailed description of the invention, and thus, the present invention should not be construed as being limited to only the drawings.
FIG. 1 is a perspective view of a battery module according to a first embodiment of the present invention.
FIG. 2 is a cross-sectional view taken along line A-A' of FIG. 1.
FIG. 3 is a cross-sectional view illustrating a modified example of the battery module illustrated in FIG. 2.
FIG. 4 is a sectional view taken along the line B-B' of FIG. 1.
FIG. 5 is an exploded perspective view of a heat absorber according to the first embodiment of the present invention.
FIG. 6 is a schematic view illustrating a state in which a cooling liquid is absorbed into the heat absorber illustrated in FIG. 5.
FIG. 7 is a view illustrating an outer appearance of the heat absorber according to the first embodiment of the present invention.
FIG. 8 is a flowchart illustrating a method for manufacturing the heat absorber according to the first embodiment of the present invention.
FIG. 9 is a schematic view illustrating an arrangement of a heat absorber and a battery cell according to a second embodiment of the present invention.
FIG. 10 is a schematic view illustrating an arrangement of a heat absorber and a battery cell according to a third embodiment of the present invention.
FIG. 11 is a schematic view illustrating an arrangement of a heat absorber and a battery cell according to a fourth embodiment of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

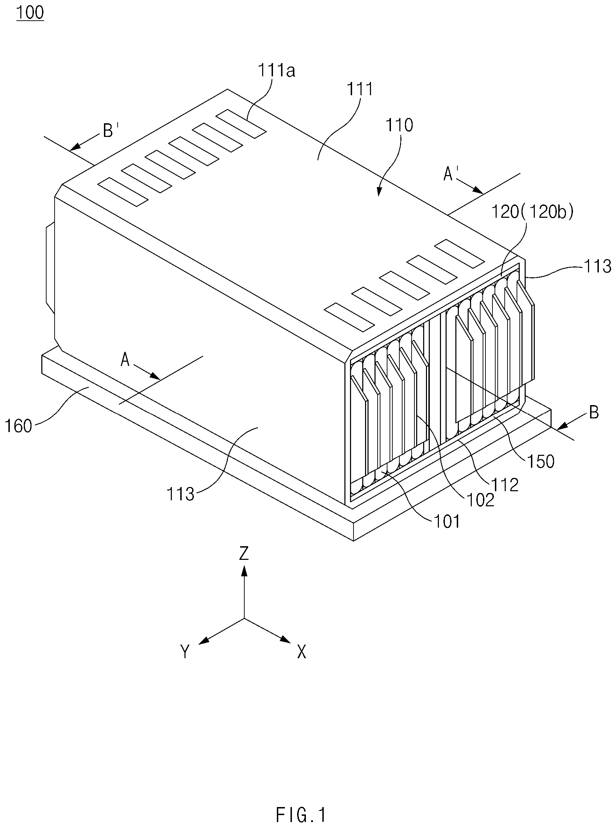

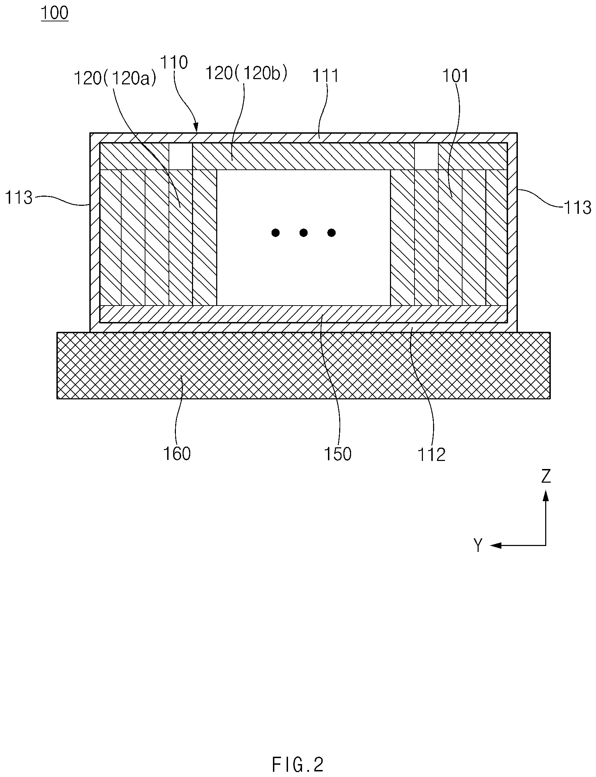

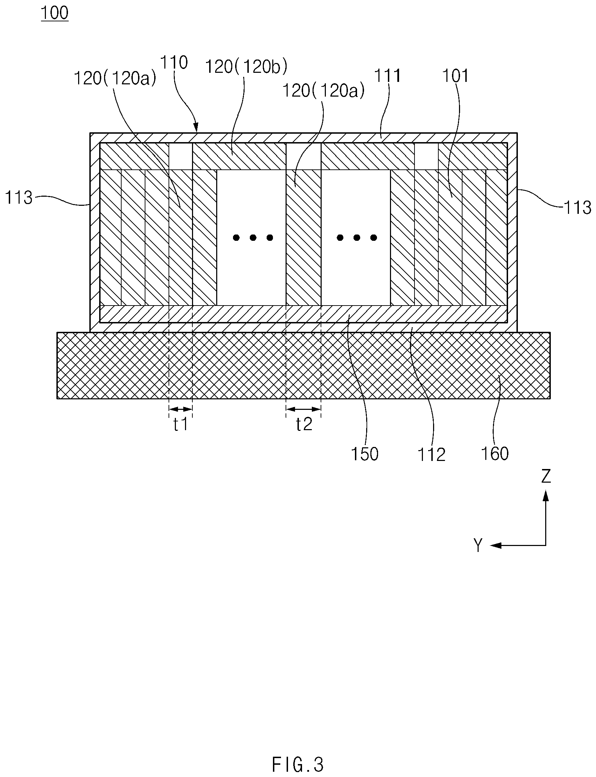

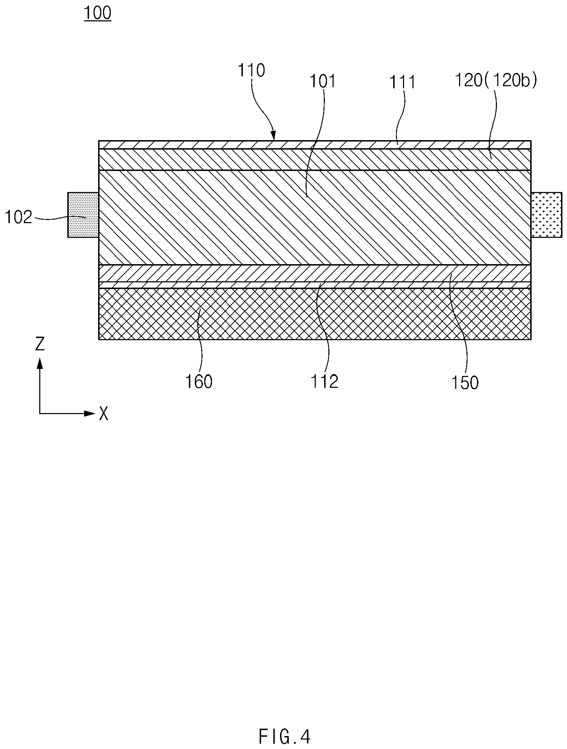

FIG. 1 is a perspective view of a battery module according to a first embodiment of the present invention, FIG. 2 is a cross-sectional view taken along line A-A' of FIG. 1, FIG. 3 is a cross-sectional view illustrating a modified example of the battery module illustrated in FIG. 2, and FIG. 4 is a sectional view taken along the line B-B' of FIG. 1.

Referring to FIG. 1, a battery module 100 according to a first embodiment of the present invention may include a housing 110, a plurality of battery cells 101 accommodated in the housing 100, and at least one heat absorber 120 accommodated in the housing 100 so as to be in contact with the battery cells 101.

The battery cells 101 may be arranged side by side with each other. The battery cells 101 may be stacked on each other. In more detail, the battery cells 101 may be erected vertically in the housing 100 and stacked in a horizontal direction. However, this embodiment is not limited thereto.

Each of the battery cells 101 may be a pouch-type battery cell in which an electrode assembly is accommodated in a pouch-type battery case, but is not limited thereto.

In addition, a pair of electrode leads 102 provided in the battery cell 101 and having opposite polarities may protrude in opposite directions. However, this embodiment is not limited thereto, and it is also possible that a pair of electrode leads 102 protrude side by side with each other. The direction in which the plurality of battery cells 101 are stacked and the direction in which the electrode lead 102 protrudes from each battery cell 101 may be perpendicular to each other. The electrode leads 102 of the plurality of battery cells 101 may be electrically connected to each other by a bus bar (not shown) or the like.

The housing 100 may accommodate the plurality of battery cells 101. For example, the housing 100 may include an upper plate 111 disposed above the plurality of battery cells 101, a lower plate 112 disposed below the plurality of battery cells 101, and a pair of side plates 113 disposed on both sides of the plurality of battery cells 101. At least one of the upper plate 111, the lower plate 112, and the pair of side plates 113 may be integrated. However, this embodiment is not limited thereto, and the upper plate 111, the lower plate 112, and the pair of side plates 113 may be provided as separate members to be coupled to each other. In addition, the housing 100 may further include a pair of end covers (not shown) covering the plurality of battery cells 101 in a front and rear direction.

The configuration of the housing 100 is not limited thereto, and the housing 100 may be configured in the form of a mono frame or a U-shaped frame.

At least one vent hole 111a may be formed in the housing 100. In more detail, at least one vent hole 111a may be formed in the upper plate 111. When a gas leaks from the battery cell 101 due to an abnormal operation of the battery cell 101, the gas may be discharged through the vent hole 111a. As a result, it is possible to prevent an internal pressure in the battery module 100 from being excessively high and to prevent an explosion from occurring.

The heat absorber 120 may be disposed inside the housing 100 so as to be in contact the battery cell 101. The battery module 100 may include at least one heat absorber 120, preferably a plurality of heat absorbers 120.

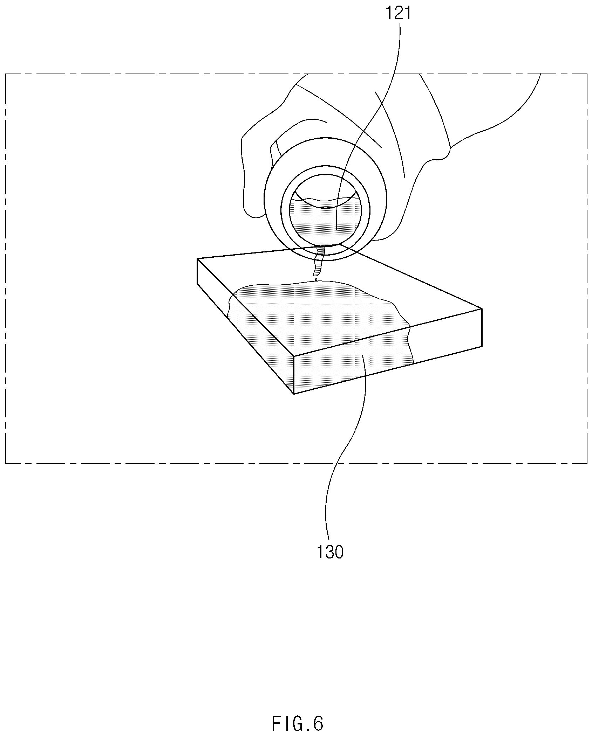

The heat absorber 120 may dissipate heat generated from the battery cell 101. In addition, when fire or the like occurs in the battery cell 101, the cooling liquid 121 (see FIG. 6) to be described later in the heat absorber 120 may be vaporized and discharged from the heat absorber 120 to perform a fire extinguishing function. In more detail, the vapor generated by vaporizing the cooling liquid 121 may reduce a temperature of the combustible gas generated in the battery cell 101 and remove solid emission particles (e.g., sparks) generated in the battery cell 101, thereby significantly reducing possibility occurrence of fire.

The detailed configuration and operation of the heat absorber 120 will be described in detail later.

Each heat absorber 120 may be disposed between the plurality of battery cells 101 or disposed between the plurality of battery cells 101 and an inner surface of the housing 110. The heat absorber 120 disposed between the plurality of battery cells 101 may be called a first heat absorber 120a, and the heat absorber 120 disposed between the plurality of battery cells 101 and the inner surface of the housing 110 may be called a second heat absorber 120b.

The battery module 100 may include at least one of the first heat absorber 120a or the second heat absorber 120b. Hereinafter, a case in which the battery module 100 includes the first heat absorber 120a and the second heat absorber 120b will be described as an example.

At least one first heat absorber 120a may be provided. Each first heat absorber 120a may be disposed between the plurality of battery cells 101. Thus, each first heat absorber 120a may be in contact with the pair of battery cells 101. At least some of the plurality of battery cells 101 may be stacked with the first heat absorber 120a therebetween. The first heat absorber 120a may preferably have a size and shape similar to that of the battery cell 101.

At least one second heat absorber 120b may be provided. Each second heat absorber 120b may be in contact with at least a portion of the plurality of battery cells 101.

The second heat absorber 120b may be in contact with a non-protruding portion of a circumference of the battery cell 101, from which the electrode lead 102 does not protrude. For example, when the battery cell 101 is erected vertically, the second heat absorber 120b may be disposed above or below the plurality of battery cells 101. In this case, as illustrated in FIGS. 2 and 4, the second heat absorber 120b may be disposed between the upper plate 111 and the plurality of battery cells 101 or may be disposed between the lower plate 112 and the plurality of battery cells 101. The second heat absorber 120b may be in contact with the first heat absorber 120a.

However, this embodiment is not limited thereto, and the second heat absorber 120b may be in contact with one surface of the battery cell 101, in particular, the outermost battery cell 101. For example, when the battery cell 101 is erected vertically, the second heat absorber 120b may be disposed at the side of the outermost battery cell 101. In this case, the second heat absorber 120b may be disposed between the side plate 113 and the outermost battery cell 101.

Also, as illustrated in FIG. 3, at least some of the plurality of first heat absorbers 120a may have different thicknesses. In more detail, the plurality of first heat absorbers 120a may include one first heat absorber 120a having a first thickness t1 and the other first heat absorber 120a having a second thickness t2 greater than the first thickness t1 and disposed inside the one first heat absorber 120a. The thicknesses of the plurality of first heat absorbers 120a may gradually increase toward the inside. As a result, the heat dissipation performance and fire extinguishing function for the inner battery cell 101, in which heat is concentrated to cause possibility of the thermal runaway, may be improved.

The battery module 100 may further include a heat conducting member 150 that is in contact with the plurality of battery cells 101 and/or a heat sink 160 that is in contact with an outer surface of the housing 110.

The heat conducting member 150 may be disposed between the plurality of battery cells 101 and the inner surface of the housing 110. The heat conducting member 150 may be a member that assists heat conduction between the housing 110 and the plurality of battery cells 101. For example, the heat conducting member 150 may be a heat conductive adhesive. Thus, heat generated from the plurality of battery cells 101 may be rapidly conducted to the housing 110 and the heat sink 160 to be described later through the heat conducting member 150.

The heat conducting member 150 may be in contact with the first heat absorber 120a. Thus, heat absorbed by the first heat absorber 120a from the battery cell 101 may be quickly conducted to the housing 110 and the heat sink 160 to be described later through the heat conducting member 150.

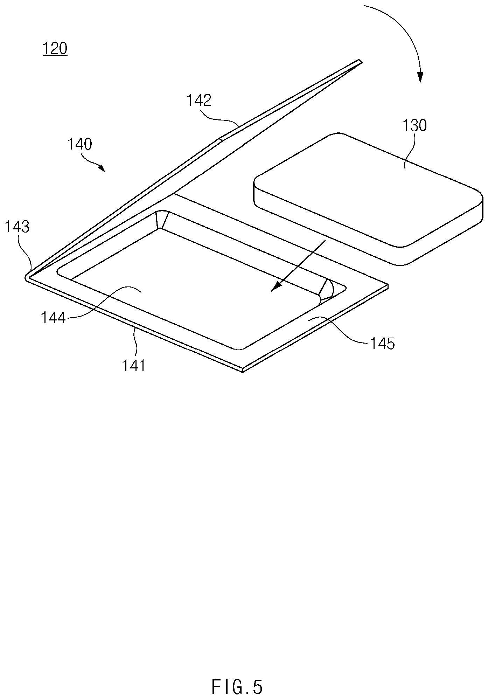

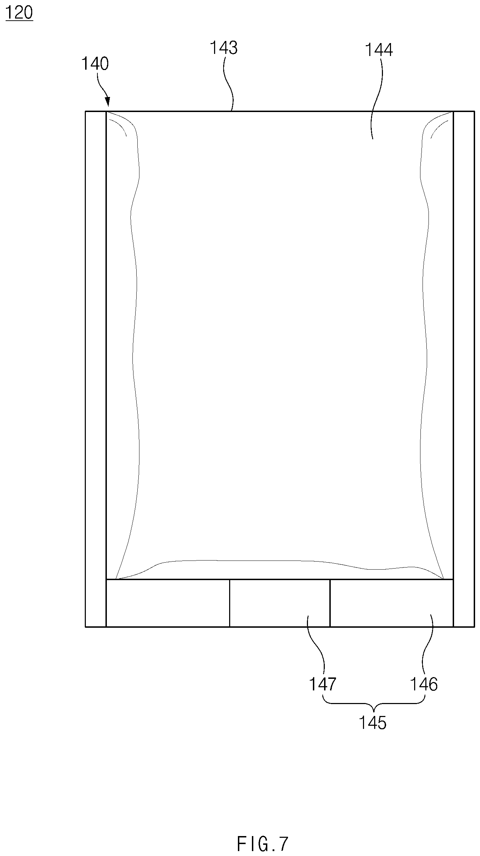

In the first heat absorber 120a, a folding part 143 (see FIGS. 5 and 7) to be described later may be in contact with the heat conducting member 150. Since the folding part 143 protrudes less from an accommodation part 144 compared to a sealing part 145, the cooling liquid 121 and the absorbent 130 within the accommodation part 144 may be more quickly cooled compared to the case in which the sealing part 145 is in contact with the heat conducting member 150.

The heat conducting member 150 may be disposed at an opposite side of the second heat absorber 120b with the plurality of battery cells 101 therebetween. As a result, heat dissipation of the plurality of battery cells 101 may be efficiently achieved.

For example, the second heat absorber 120b may be disposed above the plurality of battery cells 101, and the heat conducting member 150 may be disposed below the plurality of battery cells 101. That is, the second heat absorber 120b is disposed between the upper plate 111 and the plurality of battery cells 101, and the heat conducting member 150 is disposed between the lower plate 120 and the plurality of battery cells 101.

The heat sink 160 may be in contact with the outer surface of the housing 110 and may face the heat conducting member 150 with the housing 110 therebetween. Therefore, the heat generated from the plurality of battery cells 101 may be rapidly conducted to the heat sink 160 through the heat conducting member 150 and the housing 110.

For example, the heat conducting member 150 may be disposed below the plurality of battery cells 101, and the heat sink 160 may be in contact with a bottom surface of the housing 110. That is, the heat conducting member 150 and the heat sink 160 may face each other with the lower plate 112 therebetween.

FIG. 5 is an exploded perspective view of the heat absorber according to the first embodiment of the present invention, FIG. 6 is a schematic view illustrating a state in which the cooling liquid is absorbed into the heat absorber illustrated in FIG. 5, and FIG. 7 is a view illustrating an outer appearance of the heat absorber according to the first embodiment of the present invention.

Hereinafter, the configuration of the heat absorber 120 according to the first embodiment will be described with reference to FIGS. 5 to 7.

As described above, the heat absorber 120 according to the first embodiment of the present invention may absorb the heat generated from the battery cell 101.

In more detail, the heat absorber 120 may include an absorbent 130 that absorbs the cooling liquid 121 and an exterior 140 in which the absorbent 130 that absorbs the cooling liquid 121 is accommodated.

The cooling liquid 121 may be a liquid having good heat absorbing ability. Preferably, the cooling liquid 121 may be water. Water has an excellent ability to absorb heat through specific heat (1.0 kcal/kg) and latent heat of evaporation (539 kcal/kg), and thus, it is advantageous for cooling and extinguishing. In addition, since the water has a very large vaporization expansion rate of about 1700 times, vaporized water vapor may cover the combustion surface to extinguish the fire by suffocation.

An additive may be mixed with the cooling liquid 121. The additive may be a material that improves the extinguishing ability of the cooling liquid 121. The additive is not limited, and any material capable of improving the extinguishing ability of the cooling liquid 121 may be used without limitation.

When the cooling liquid 121 is water, the additive may include at least one of an antifreeze that lowers a freezing point of water, a penetrant that improves a penetration effect by lowering a surface tension of water, a thickener that allows water to increase in viscosity to prevent a loss of water, a density improver, or an emulsifier that enhances an extinguishing effect of high-boiling oil. Since these types of additives are known materials, detailed descriptions thereof are omitted.

In addition, the additive may include a co-catalyst that prevents a continuous chain reaction of the combustible material from occurring. For example, the additive may include salts, more specifically, potassium carbonate of alkali metal salts and ammonium phosphate.

It is also possible to use a commercially available fire extinguishing agent as the additive. For example, F-500 Encapsulator Agent (F-500 EA) produced by Hazard Control Technologies may be used as the additive.

The absorbent 130 may have a material having high absorbency in order to sufficiently absorb the cooling liquid 120. Preferably, super absorbent polymer (SAP) or super absorbent fiber (SAF) may be provided as the absorbent 130.

The super absorbent polymer and the super absorbent fiber may absorb tens to hundreds of times a solution compared to their own weight. Since each of the super absorbent polymer and the super absorbent fiber has a three-dimensional network structure in which fine pores are defined and have a large amount of hydrophilic groups, the super absorbent polymer and the super absorbent fiber may absorb a large amount of solution without dissolving in a solution such as water. Particularly, when the super absorbent polymer absorbs a solution, the super absorbent polymer may be swelled out of its original form and thus may be changed into a gel form.

The exterior 140 may be sealed after accommodating the absorbent 130 that absorbs the cooling liquid 121.

For example, the exterior 140 may be manufactured by molding a laminate sheet. The laminate sheet may have a well-known component molded into a general pouch-type battery case. In more detail, the exterior 140 may include an outer polymer layer disposed at the outermost side, an inner polymer layer disposed at the innermost side, and a metal layer disposed between the outer polymer layer and the inner polymer layer.

The metal layer may secure a predetermined level or more of mechanical strength, be light in weight, prevent leakage of the cooling liquid, and secure heat dissipation. For example, the metal layer may include aluminum.

The outer polymer layer may protect the heat absorber 120 from external friction and collision. For example, the outer polymer layer may be made of a polyethylene terephthalate (PET) material. However, this embodiment is not limited thereto, and the material forming the outer polymer layer may be variously employed as needed.

The inner polymer layers may be layers that are fused to each other during the sealing of the exterior 140. Since the inner polymer layer is in contact with the cooling liquid, the inner polymer layer may have corrosion resistance, and since the inside of the inner polymer layer has to be completely sealed, the inner polymer layer may have high sealing performance. That is, the sealing part in which the inner polymer layers adhere to each other may have excellent thermal bonding strength. For example, the inner polymer layer may be made of a polypropylene (PP) or polyethylene (PE) material. However, this embodiment is not limited thereto, and the material forming the inner polymer layer may be variously employed as needed.

The exterior 140 may include a first exterior 141 and a second exterior 142. A concave accommodation part 144 in which the absorbent 130 is accommodated may be provided in at least one of the first exterior 141 or the second exterior 142.

The first exterior 141 and the second exterior 142 may be connected to each other by a folding part 143, and when the folding part 143 is folded, the absorbent 130 may be accommodated between the first exterior 141 and the second exterior 142. However, this embodiment is not limited thereto, and it is also possible that the first exterior 141 and the second exterior 142 are separated from each other to be manufactured separately.

Areas on which the first exterior 141 and the second exterior 142 are in contact with each other may be fused and sealed to each other by heat and a pressure and thus may be referred to as a sealing part 145.

The sealing part 145 may be disposed on at least a part of the circumference of the accommodating part 144. For example, the sealing part 145 may be disposed on three sides of four sides of the accommodation part 144, and the folding part 143 may be disposed on remaining one side. If the first exterior 141 and the second exterior 142 are separated from each other to be manufactured separately, those skilled in the art may be easily understand that the sealing part 145 is disposed on the four sides of the accommodation part 144.

However, the configuration of the exterior 140 is not limited thereto, and thus, the configuration is not limited as long as the exterior accommodates the absorbent 130 (FIG. 6) absorbing the cooling liquid. As another example, the exterior 140 may include a case having one end opened and a cap sealing the case.

The exterior 140 may include a venting part 147 configured to discharge the vaporized cooling liquid when the internal pressure of the exterior 140 increases due to the vaporization of the cooling liquid 121. The configuration of the venting part 147 is not limited, and those skilled in the art may implement the venting part 147 in various manners.

For example, the venting part 147 may include a weak sealing part configured to be preferentially ruptured when the internal pressure of the exterior 140 increases due to the vaporization of the cooling liquid 121. Hereinafter, for convenience of description, the reference numeral of the weak sealing part is denoted by '147' like that of the venting part.

The weak sealing part 147 may be provided by relatively weakly sealing a portion of the sealing part 145 than the surroundings. In more detail, when fire or the like occurs in the battery cell 101, and a temperature rises excessively, the cooling liquid 121 absorbed into the absorbent 130 may be vaporized by the heat absorbed by the heat absorber 120, and thus, an internal pressure of the exterior 140 may increase, and the weak sealing part 147 may be preferentially ruptured. As a result, the vapor evaporated from the cooling liquid 121 may be quickly diffused into the battery module 100 to perform the fire extinguishing function.

In more detail, the sealing part 145 of the exterior 140 may include a first sealing part 146 and a second sealing part 147 having sealing strength less than that of the first sealing part 146. The second sealing part 147 may be referred to as a weak sealing part.

The sealing part 145 may be provided by fusing the inner polymer layers of the exterior 140 to each other by heat and a pressure applied by a sealing tool. In this process, the sealing strength of the first sealing part 146 and the second sealing part 147 may be provided differently by changing a pressure, a temperature, a pressing time, etc. of the sealing tool. Alternatively, the sealing strength may be provided differently through a polymer recrystallization process of the inner polymer layer.

However, this embodiment is not limited thereto, and it is also possible to insert a material that weakens the sealing strength at a high temperature into the second sealing part 147. In more detail, the material may be melted at the same or similar temperature as the temperature at which the cooling liquid 121 is vaporized, and when the material is melted, the sealing strength of the second sealing part 147 may become weak and be rapidly ruptured. The type of the material is not limited.

An area of the second sealing part 147 may be less than that of the first sealing part 146. Thus, the overall sealing strength of the sealing part 145 may be maintained high.

As described above, the configuration of the venting part 147 is not limited to the weak sealing part and may be implemented in other manners. For example, the venting part 147 may include a venting valve that is mechanically opened and closed according to the internal pressure of the exterior 140. In general, the venting valve may include a seat having a passage, a valve body opening and closing the passage, and an elastic member applying force to the valve body in a direction blocking the passage. Since the venting valve is a well-known component, those skilled in the art will be able to easily understand its configuration and operation.

Hereinafter, an action of the heat absorber 120 will be described.

The heat absorber 120 may absorb heat generated during charging and discharging of the battery cell 101 to maintain the battery cell 101 having a low temperature. Particularly, since the cooling liquid 121 in the heat absorber 120 has high heat absorbing ability, a high heat dissipation effect may be obtained.

When a safety problem such as the thermal runaway or fire occurs in the battery cell 101, the cooling liquid 121 in the heat absorber 120 may be vaporized due to the high heat and be discharged into the battery module 100 through the venting part 147 of the exterior 140. Since the additive that improves the extinguishing ability is mixed with the vapor, the temperature of the combustible gas generated from the battery cell 101 may be reduced, and the solid emission particles (e.g., sparks) generated from the battery cell 101 are removed to effectively reduce the possibility of occurrence of the fire.

The venting part 147 provided in the exterior 140 may non-overlap the venting hole 111a (see FIG. 1) formed in the housing 110 in the penetrated direction of the venting hole 111a. In more detail, at least one venting hole 111a may be formed in a top surface of the housing 110, and the venting part 147 may non-overlap the venting hole 111a in a vertical direction.

Thus, the leakage of the vaporized cooling liquid discharged from the venting part 147 through the venting hole 111a of the housing 110 may be delayed, and the fire extinguishing action may be continuously and reliably performed while staying in the battery module 100.

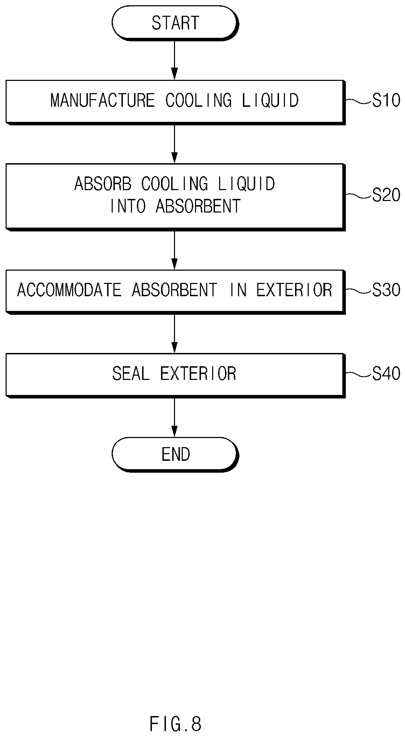

FIG. 8 is a flowchart illustrating a method for manufacturing the heat absorber according to the first embodiment of the present invention.

Hereinafter, the contents described above and overlapping contents are cited.

A method for manufacturing the heat absorber 120 includes a process (S20) of absorbing the cooling liquid 121 into the absorbent 130, a process (S30) of accommodating the absorbent 130 into the exterior 140, and a process (S40) of sealing the exterior 140. The manufacturing method may further include a process (S10) of preparing the cooling liquid 121.

For example, in the process (S10) of preparing the cooling liquid 121, the cooling liquid 121 may be prepared by mixing the additive with water.

The process (S20) of absorbing the cooling liquid 121 into the absorbent 130 and the process(S30) of accommodating the absorbent 130 into the exterior 140 may be sequentially performed. However, the present invention is not limited thereto, and the cooling liquid 121 may be absorbed into the absorbent 130 in the state in which the absorbent 130 is accommodated in the exterior 140, more specifically, the accommodation part 144.

In the process (S40) of sealing the exterior 140, the heat and pressure may be applied to the area on which the exterior 140, more specifically, the first exterior 141 and the second exterior 142 are in contact with each other using the sealing tool, to seal the sealing part 145.

In more detail, the process (S40) of sealing the exterior 140 may include a process of forming the first sealing part 146 and a process of forming the second sealing part 147 having sealing strength less than that of the first sealing part 146. As described above, the process of forming the first sealing part 146 and the process of forming the second sealing part 147 may have different pressures, temperatures, pressing times, etc. of the sealing tool. Alternatively, during the process of forming the second sealing part 147, a material that weakens the sealing strength at a high temperature may be inserted into a portion to be the second sealing part 147.

Alternatively, in the process (S40) of sealing the exterior 140, the venting valve may be sealed between the first exterior 141 and the second exterior 142 together. In this case, the venting valve may be fixed to the sealing part 145 to act as the venting part 147.

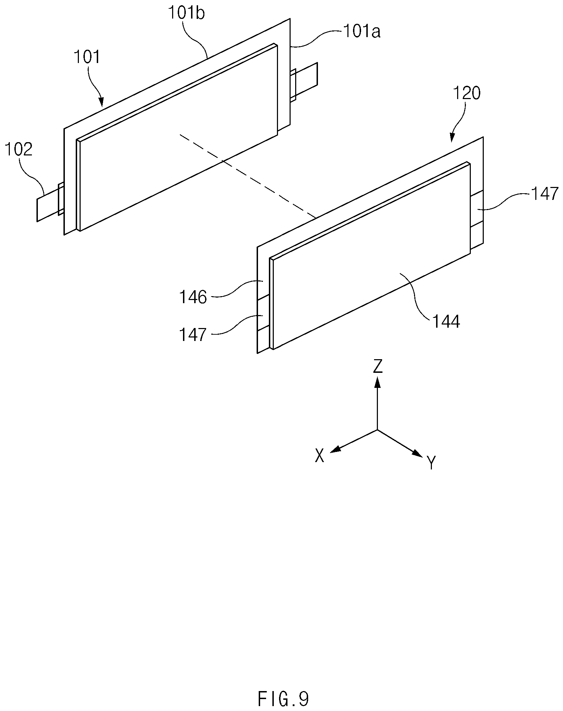

FIG. 9 is a schematic view illustrating an arrangement of a heat absorber and a battery cell according to a second embodiment of the present invention. A heat absorber 120 illustrated in FIG. 9 may be the first heat absorber 120a described above.

In the battery module 100 according to the second embodiment, a side in which a venting part 147 is provided in an exterior 140 of the heat absorber 120 may correspond to a side from which an electrode lead 102 protrudes from a battery cell 101.

For example, as illustrated in FIG. 9, the electrode lead 102 may protrude from each of both ends 101a of the battery cell 101. In this case, the venting part 147 may be provided on each of both ends of the exterior 140 of the heat absorber 120.

As a result, a combustible gas discharged to a peripheral portion of the electrode lead 102 of the battery cell 101 may be quickly extinguished by a vaporized cooling liquid discharged to the vent part 147.

When an abnormal high temperature or thermal runaway occurs due to an abnormal operation of the battery cell 101, the sealing of the peripheral portion of the electrode lead 102, which has relatively weak sealing force, in the battery cell 101 may be destroyed, and the combustible gas may be rapidly discharged. Since the venting part 147 of the heat absorber 120 is disposed close to a point at which the combustible gas is discharged from the battery cell 101, that is, the peripheral portion of the electrode lead 102, a function of extinguishing the combustible gas may be improved.

In addition, in the battery module 100 according to the second embodiment, the venting part 147 of the heat absorber 120 may face the electrode lead 102 of the battery cell 101. In more detail, the venting part 147 of the heat absorber 120 may face the electrode lead 102 of the battery cell 101 in a stacking direction (direction parallel to a Y-axis) or a full-width direction (direction parallel to a Z-axis) of the battery cell 101. The electrode lead 102 may include a portion disposed inside the battery cell 101 as well as a portion protruding from the battery cell 101.

In more detail, the venting part 147 of the first heat absorber 120a may face the electrode lead 102 of the battery cell 101 in the stacking direction of the battery cell 101 (direction parallel to the Y-axis). Although not shown in FIG. 9, the venting part 147 of the second heat absorber 120b may face the electrode lead 102 of the battery cell 101 in the full-width direction (direction parallel to the Z-axis) of the battery cell 101.

As a result, the flame and/or gas discharged to a peripheral portion of the electrode lead 102 of the battery cell 101 may be quickly extinguished by a vaporized cooling liquid discharged to the vent part 147.

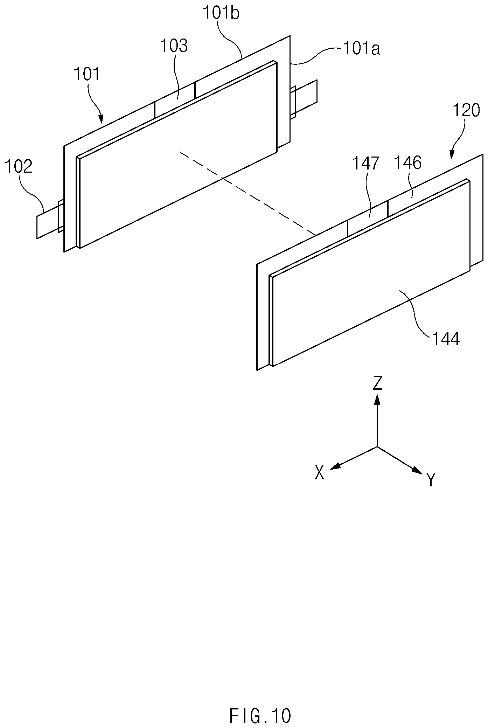

FIG. 10 is a schematic view illustrating an arrangement of a heat absorber and a battery cell according to a third embodiment of the present invention. A heat absorber 120 illustrated in FIG. 10 may be the first heat absorber 120a described above.

The battery cell 101 may include a gas venting part 103 configured to discharge a gas inside a battery cell 101. When an internal pressure of the battery cell 101 increases, the gas in the battery cell 101 may be discharged through the gas venting part 103.

FIG. 10 illustrates a state in which the gas venting part 103 is provided in a long side 101b of the battery cell 101. However, a position of the gas venting part 103 is not limited, and it is also possible that the gas venting part 103 is provided in a short side 101a of the battery cell 101.

The configuration of the gas venting part 103 is not limited, and those skilled in the art may implement the gas venting part 103 in various manners.

For example, the gas venting part 103 may include a weak sealing part configured to be preferentially ruptured when an internal pressure of the battery cell 101 increases. The weak sealing part may be provided by relatively weakly sealing a portion of the sealing part of the pouch weaker than the surroundings.

The configuration of the venting part 103 is not limited to the weak sealing part and may be implemented in other manners. As another example, the gas venting part 103 may include a venting valve that is mechanically opened and closed according to the internal pressure of the battery cell 101. As another example, the gas venting part 103 may include a permeable member through which gas is permeable. The permeable member may have an olefin-based polymer or a fluorine-based polymer material such as PTFE (polytetrafluoroethylene).

In the battery module 100 according to the third embodiment, a side in which a venting part 147 is provided in an exterior 140 of the heat absorber 120 may correspond to a side in which the gas venting part 103 is provided in the battery cell 101.

For example, as illustrated in FIG. 10, the gas venting part 103 may be provided in a long side 101b of the battery cell 101. In this case, the venting part 147 may be provided in a long side of the exterior 140 of the heat absorber 120.

Thus, a combustible gas discharged through the gas venting part 103 of the battery cell 101 may be quickly extinguished a vaporized cooling liquid discharged through the venting part 147 of the heat absorber 120.

When an abnormal high temperature or thermal runaway occurs due to an abnormal operation of the battery cell 101, an internal pressure of the battery cell 101 may increase, and thus, the combustible gas may be rapidly discharged to the gas venting part 103. Since the venting part 147 of the heat absorber 120 is disposed close to a point at which the combustible gas is discharged from the battery cell 101, that is, the gas venting part 103, a function of extinguishing the combustible gas may be improved.

In addition, in the battery module 100 according to the third embodiment, the venting part 147 of the heat absorber 120 may face the gas venting part 103 of the battery cell 101. In more detail, the venting part 147 of the heat absorber 120 may face the gas venting part 103 of the battery cell 101 in a stacking direction (direction parallel to a Y-axis) or a full-width direction (direction parallel to a Z-axis) of the battery cell 101.

In more detail, the venting part 147 of the first heat absorber 120a may face the gas venting part 103 of the battery cell 101 in the stacking direction of the battery cell 101 (direction parallel to the Y-axis). Although not shown in FIG. 10, the venting part 147 of the second heat absorber 120b may face the gas venting part 103 of the battery cell 101 in the full-width direction (direction parallel to the Z-axis) of the battery cell 101.

As a result, the flame and/or gas discharged to a peripheral portion of the electrode lead 102 of the battery cell 101 may be quickly extinguished by a vaporized cooling liquid discharged to the vent part 147.

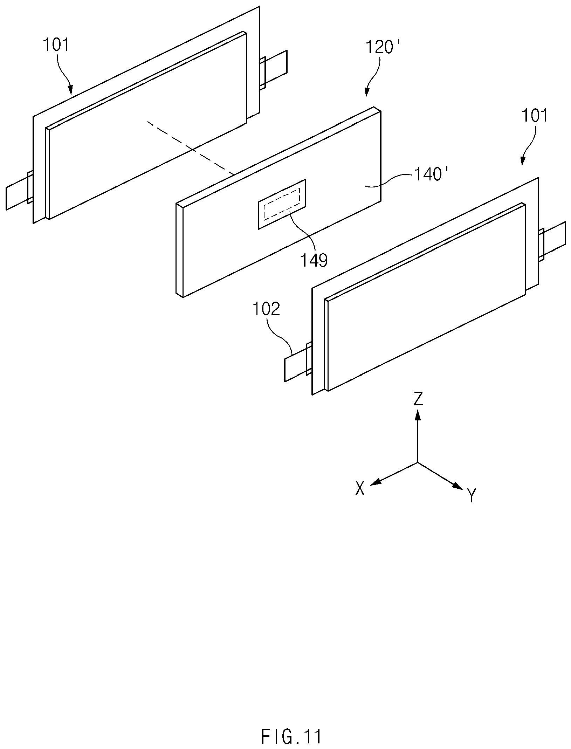

FIG. 11 is a schematic view illustrating an arrangement of a heat absorber and a battery cell according to a fourth embodiment of the present invention. A heat absorber 120' illustrated in FIG. 11 may be the first heat absorber 120a described above.

The heat absorber 120' according to this embodiment includes an exterior 140' accommodating an absorbent 130 (see FIG. 6) that absorbs a cooling liquid and a venting part 149 configured to discharging a vaporized cooling liquid when the cooling liquid is vaporized to increase in internal pressure of the exterior 140.

The configuration of the venting part 149 is not limited, and those skilled in the art may implement the venting part 149 in various manners. For example, an opening may be formed in the exterior 140', and a cover covering the opening may be sealed to the exterior 140' to provide a venting part 149. In this case, when the internal pressure of the exterior 140' exceeds a certain level, the seal between the cover and the exterior 140' may be destroyed, and the vaporized cooling liquid may be discharged through the opening.

A pair of venting parts 149 may be provided in the exterior 140'. The pair of venting parts 149 may face different battery cells 101, respectively.

In more detail, the pair of venting parts 149 may be provided on both sides of the exterior 140', respectively. In more detail, one of the pair of venting parts 149 may be provided on one side of the exterior 140' to face the battery cell 101. In addition, in the pair of venting parts 149, the other venting part 149 may be provided on the other surface of the exterior 140'. The one venting part may be referred to as a first venting part, and the other venting part may be referred to as a second venting part.

When the internal pressure in the heat absorber 120' increases, the venting part 149 facing the battery cell 101 in the pair of venting parts 149 may be opened first as long as flame is generated, or a combustible gas is discharged. That is, it is preferable that the opening of the venting part 149 is promoted by a high temperature. For example, the sealing may be performed by inserting a material that weakens sealing strength at the high temperature between the cover covering the opening formed in the exterior 140' and the exterior 140'. However, this embodiment is not limited thereto.

As a result, the vaporized cooling liquid may be discharged from the venting part 149 toward the battery cell 101 in which the flame is generated, or the combustible gas is discharged, and the fire extinguishing action may be performed more quickly.

The above-disclosed subject matter is to be considered illustrative, and not restrictive, and the appended claims are intended to cover all such modifications, enhancements, and other embodiments, which fall within the true spirit and scope of the present disclosure.

Thus, the embodiment of the present invention is to be considered illustrative, and not restrictive, and the technical spirit of the present invention is not limited to the foregoing embodiment.

Therefore, the scope of the present disclosure is defined not by the detailed description of the invention but by the appended claims, and all differences within the scope will be construed as being included in the present disclosure.

### [Description of the Symbols]

| | | | |
|---|---|---|---|
| 100: | Battery module | 101: | Battery cell |
| 110: | Housing | 120: | Heat absorber |
| 121: | Cooling liquid | 130: | Absorbent |
| 140: | Exterior | 150: | Heat conducting member |
| 160: | Heat sink | | |

## Claims

1. A heat absorber that absorbs heat generated in a battery cell, the heat absorber comprising:
an absorbent configured to absorb a cooling liquid; and
an exterior in which the absorbent is accommodated in a state of absorbing the cooling liquid.

2. The heat absorber of claim 1, wherein the cooling liquid is water in which an additive is mixed, and
wherein the additive is a material that improves extinguishing ability of the cooling liquid.

3. The heat absorber of claim 1, wherein the absorbent comprises a super absorbent polymer or super absorbent fiber.

4. The heat absorber of claim 1, wherein the exterior is provided with a venting part configured to discharge a vaporized cooling liquid when the cooling liquid is vaporized to increase in internal pressure of the exterior.

5. The heat absorber of claim 1, wherein the exterior comprises:
an accommodation part configured to accommodate absorbent; and
a sealing part disposed at at least a portion of a circumference of the accommodation part,
wherein the sealing part comprises:
a first sealing part; and
a second sealing part having sealing strength less than that of the first sealing part.

6. The heat absorber of claim 5, wherein the second sealing part has an area less than that of the first sealing part.

7. A battery module comprising:
a housing;
a plurality of battery cells accommodated in the housing; and
at least one heat absorber accommodated in the housing so as to be in contact with the battery cells,
wherein the heat absorber comprises:
an absorbent configured to absorb a cooling liquid; and
an exterior in which the absorbent is accommodated in a state of absorbing the cooling liquid.

8. The battery module of claim 7, wherein the heat absorber is disposed between the plurality of battery cells.

9. The battery module of claim 8, wherein the heat absorber comprises:
one heat absorber having a first thickness; and
the other heat absorber having a second thickness greater than the first thickness and disposed inward than the one heat absorber.

10. The battery module of claim 8, further comprising a heat conducting member that is in contact with the plurality of battery cells and the heat absorber.

11. The battery module of claim 7, wherein the heat absorber is disposed between the plurality of battery cells and an inner surface of the housing.

12. The battery module of claim 11, further comprising a heat conducting member that is in contact with the plurality of battery cells and disposed at an opposite side of the heat absorber with the plurality of battery cells therebetween.

13. The battery module of claim 10 or 12, further comprising a heat sink that is in contact with an outer surface of the housing and facing the heat conducting member with the housing therebetween.

14. The battery module of claim 7, wherein the exterior is provided with a venting part configured to discharge a vaporized cooling liquid when the cooling liquid is vaporized to increase in internal pressure of the exterior.

15. The battery module of claim 14, wherein a side of the exterior, in which the venting part is provided, corresponds to a side of each battery cell, from which an electrode lead protrudes.

16. The battery module of claim 14, wherein the venting part faces an electrode lead of each of the battery cells in a stacking direction or full-width direction of the battery cell.

17. The battery module of claim 14, wherein the battery cell is provided with a gas venting part configured to discharge an internal gas of the battery cell, and
a side of the exterior, in which the venting part is provided, corresponds to a side of the battery cell, in which the gas venting part is provided.

18. The battery module of claim 14, wherein the battery cell is provided with a gas venting part configured to discharge an internal gas of the battery cell, and
the venting part faces the gas venting part of the battery cell in a stacking direction or full-width direction of the battery cell.

19. The battery module of claim 14, wherein at least one venting hole is formed in the housing, and
the venting part non-overlaps the venting hole in a penetrated direction of the venting hole.

20. The battery module of claim 14, wherein a pair of venting parts are provided to face battery cells different from each other, respectively.
